# EUROPÄISCHE PATENTSCHRIFT

(11) **EP 3 250 427 B1**
(45) Veröffentlichungstag und Bekanntmachung des Hinweises auf die Patenterteilung: **25.09.2019**
(21) Anmeldenummer: 16711975.9
(22) Anmeldetag: 28.01.2016
(51) Int. Cl.: B60W 30/12, B60W 50/00

(54) **FAHRZEUGSTEUERVORRICHTUNG UND VERFAHREN**
VEHICLE CONTROL DEVICE AND METHOD
DISPOSITIF DE COMMANDE DE VÉHICULE ET PROCÉDÉ

(30) Priorität: 29.01.2015 DE 102015201569
(43) Veröffentlichungstag der Anmeldung: 06.12.2017
(73) Patentinhaber: Continental Teves AG & Co. OHG, 60488 Frankfurt am Main (DE)
(72) Erfinder: GREWE, Ralph, 65933 Frankfurt am Main (DE)
(86) Internationale Anmeldenummer: PCT/DE2016/200057
(87) Internationale Veröffentlichungsnummer: WO 2016/119790

(56) Entgegenhaltungen:
- EP-A1- 1 550 573
- WO-A1-2007/107361
- DE-A1- 10 354 659
- DE-A1- 19 838 336
- DE-A1-102011 108 292
- US-A1- 2002 183 911

## Beschreibung

### Gebiet der Erfindung

Die vorliegende Erfindung bezieht sich auf eine Fahrzeugsteuervorrichtung für ein Fahrzeug und ein entsprechendes Verfahren.

### Stand der Technik

Obwohl die vorliegende Erfindung im Folgenden hauptsächlich in Zusammenhang mit Personenkraftwagen beschrieben wird, ist sie darauf nicht beschränkt, sondern kann mit jeder Art von Fahrzeug genutzt werden.

In modernen Fahrzeugen werden immer komplexere Fahrerassistenzsysteme eingesetzt. Für solche Fahrerassistenzsysteme und Funktionen, wie z.B. dem hochautomatisierten Fahren, wird eine große Zahl von Sensoren im Fahrzeug benötigt, die eine exakte Erfassung des Fahrzeugumfelds ermöglichen. Um das Fahrzeug autonom zu steuern ist es z.B. notwendig, die Fahrspuren zuverlässig zu erkennen, sodass das Fahrzeug innerhalb einer erkannten Fahrspur geführt werden kann.

Für heutige Assistenzsysteme wird an Fusionskonzepten für die Umfeldsensoren gearbeitet. Aus verschiedenen Datenquellen, z.B. Radarsensoren, Kameras, Fahrdynamiksensoren, GPS und digitalen Karten wird eine Repräsentation der Fahrzeugumgebung, das sogenannte Umfeldmodell, aufgebaut. Ziel der Datenfusion ist es, eine höhere Genauigkeit und Sicherheit sowie einen größeren Sichtbereich gegenüber einzelnen Datenquellen zu erzielen.

Insbesondere in Hinblick auf hochautomatisiertes Fahren ist eine hohe Systemverfügbarkeit notwendig. Heute umgesetzte Fusionsarchitekturen legen den Schwerpunkt auf eine Verbesserung von Genauigkeit, Sichtbereich sowie eine erhöhte Sicherheit der Detektionen.

Die dabei entstehende große Vernetzung der einzelnen Komponenten bzw. Softwaremodule führt dazu, dass ein Ausfall eines einzelnen Moduls leicht die Funktionalität des Gesamtsystems beeinträchtigt.

Dies steht aber im Widerspruch zu einer hohen Systemverfügbarkeit, die für automatisiertes Fahren notwendig ist.

Beispielsweise basiert die Berechnung der Fahrzeugposition heute auf dem ESC-Sensorcluster (ESC: Electronic Stability Control) und wird von Modulen wie dem Objekttracking und dem Occupancy-Grid bzw. dem Belegungsgitter verwendet. Fällt der ESC-Sensorcluster aus oder hat das Positionierungs-Modul einen Fehler, sind somit alle anderen Module ebenfalls betroffen und das Gesamtsystem fällt aus.

Als Stand der Technik ist die Schrift EP1 550 573 A1 bekannt, die ein Steuergerät auf mehreren hierachischen Ebenen offenbart. Informationen werden jeweils zwischen hierachisch höher und tiefer liegenden Ebenen ausgestauscht.

Weiteren Stand der Technik bildet die Schrift US 2002/0183911 A1, die ein Steuergerät mit einer Kommunikationsstruktur von höheren zu tieferen Hierachieebenen beschreibt.

### Offenbarung der Erfindung

Es ist daher eine Aufgabe der vorliegenden Erfindung eine verbesserte Steuerung für ein Fahrzeug bereitzustellen.

Demgemäß offenbart die vorliegende Erfindung eine Fahrzeugsteuervorrichtung mit den Merkmalen des Patentanspruchs 1 und ein Verfahren mit den Merkmalen des Patentspruchs 10.

### Demgemäß ist vorgesehen:

Eine Fahrzeugsteuervorrichtung für ein Fahrzeug, mit einer Anzahl. d.h. einer oder mehreren, von ersten voneinander abhängigen Steuereinrichtungen, welche in einer ersten logischen Ebene angeordnet sind und ausgebildet sind, vorgegebene erste Fahrzeugsteuerfunktionen zu berechnen und erste Berechnungsergebnisse auszugeben, einer Anzahl von weiteren voneinander unabhängigen Steuereinrichtungen, welche in einer Anzahl von der ersten logischen Ebene übergeordneten und untereinander hierarchisch angeordneten logischen Ebene angeordnet sind und ausgebildet sind, vorgegebene weitere Fahrzeugsteuerfunktionen zu berechnen und weitere Berechnungsergebnisse auszugeben, wobei die weiteren Steuereinrichtungen ausgebildet sind, Berechnungsergebnisse lediglich derjenigen Steuereinrichtungen als Eingangsgrößen für die entsprechenden Fahrzeugsteuerfunktionen zu nutzen, welche in logischen Ebenen angeordnet sind, welche hierarchisch unterhalb der logischen Ebene der jeweiligen Steuereinrichtung angeordnet sind.

### Ferner ist vorgesehen:

Ein Verfahren zum Steuern eines Fahrzeugs, aufweisend Anordnen einer Anzahl, d.h. eine oder mehrere, von ersten voneinander unabhängigen Steuereinrichtungen in einer ersten logischen Ebene, Berechnen vorgegebener erster Fahrzeugsteuerfunktionen in den ersten Steuereinrichtungen, Anordnen einer Anzahl von weiteren voneinander unabhängigen Steuereinrichtungen in einer Anzahl von der ersten logischen Ebene übergeordneten und untereinander hierarchisch angeordneten logischen Ebene, und Berechnen weiterer vorgegebener Fahrzeugsteuerfunktionen in den weiteren voneinander unabhängigen Steuereinrichtungen basierend auf Berechnungsergebnissen lediglich derjenigen Fahrzeugsteuerfunktionen, welche in Steuereinrichtungen in logischen Ebenen angeordnet sind, welche hierarchisch unterhalb der logischen Ebene der Steuereinrichtung der jeweiligen Fahrzeugsteuerfunktion angeordnet sind.

### Vorteile der Erfindung

Die der vorliegenden Erfindung zu Grunde liegende Erkenntnis besteht darin, dass eine enge Verknüpfung übergeordneter Funktionen mit den darunterliegenden Sensoren zu einer hohen Abhängigkeit der einzelnen Systemkomponenten voneinander führt.

Die der vorliegenden Erfindung zu Grunde liegende Idee besteht nun darin, dieser Erkenntnis Rechnung zu tragen und eine Möglichkeit vorzusehen, diese Abhängigkeiten aufzulösen.

Dazu sieht die vorliegende Erfindung vor, die Berechnungen zur Steuerung des Fahrzeugs in mehrere logische Ebenen zu unterteilen. Innerhalb jeder Ebene findet keine Vernetzung der einzelnen Funktionen bzw. Steuereinrichtung statt. Die einzelnen Steuereinrichtungen sind folglich voneinander unabhängig. Bei Ausfall einer Komponente bleiben folglich die weiteren Steuereinrichtungen der jeweiligen Ebene funktionsfähig. Den entsprechenden logischen Ebenen können darauf aufbauende Funktionen zugeordnet werden. Die Funktionen in niedrigen logischen Ebenen können z.B. nur unvollständige und unsichere Informationen über die Fahrzeugumgebung haben und daher nur eingeschränkt Leistungsfähig sein. Mit jeder übergeordneten logischen Ebene steigt die Datenqualität und damit können der Funktionsumfang und die Funktionsqualität verbessert werden.

Unter den logischen Ebenen ist folglich zu verstehen, dass Funktionen bzw. Steuereinrichtungen einer logischen Ebene nicht untereinander vernetzt sind und das Funktionen bzw. Steuereinrichtungen einer ersten logischen Ebene lediglich auf Daten von Funktionen bzw. Steuereinrichtungen einer zweiten logischen Ebene zugreifen, die hierarchisch unter der ersten logischen Ebene angeordnet ist. Unter den logischen Ebenen ist aber keine physische Anordnung der einzelnen Steuereinrichtungen zu verstehen.

Vorteilhafte Ausführungsformen und Weiterbildungen ergeben sich aus den Unteransprüchen sowie aus der Beschreibung unter Bezugnahme auf die Figuren.

In einer Ausführungsform sind die Steuereinrichtungen ausgebildet, mit den jeweiligen Berechnungsergebnissen das Fahrzeug, insbesondere eine Querbeschleunigung und/oder eine Längsbeschleunigung des Fahrzeugs, zu steuern. Dies ermöglicht eine separate Steuerung des Fahrzeugs in unterschiedlichen logischen Ebenen basierend auf den jeweils verfügbaren Daten.

In einer Ausführungsform weisen die ersten Steuereinrichtungen jeweils Sensoren auf und sind ausgebildet, eine Fahrzeugbewegung des Fahrzeugs und/oder eine Relativbewegung von Objekten gegenüber dem Fahrzeug und/oder die Fahrzeugposition und/oder die Fahrzeugorientierung basierend auf den Daten ihrer eigenen Sensoren zu schätzen. Dies ermöglicht es den ersten Steuereinrichtungen die Bewegung des Fahrzeugs unabhängig von anderen Steuereinrichtungen ausschließlich basierend auf deren eigenen Sensoren zu schätzen.

In einer Ausführungsform sind die ersten Steuereinrichtungen ausgebildet, das Fahrzeug basierend auf den ersten Berechnungsergebnissen derart zu steuern, dass eine Kollision des Fahrzeugs mit einem Hindernis vermieden wird oder deren Intensität verringert wird und/oder ein Verlassen einer Fahrspur durch das Fahrzeug vermieden wird. Die ersten Steuereinrichtungen ermöglichen folglich eine Steuerung des Fahrzeugs in Situationen, in welchen z.B. lediglich ein rasches Verzögern des Fahrzeugs notwendig ist.

In einer Ausführungsform sind die ersten Steuereinrichtungen ausgebildet, als Berechnungsergebnisse Umgebungsdaten zu einer Umgebung des Fahrzeugs auszugeben.

In einer Ausführungsform weisen die Umgebungsdaten insbesondere Belegungsgitter und/oder Objektlisten und/oder Positionsdaten des Fahrzeugs und/oder Orientierungsdaten des Fahrzeugs auf. Insbesondere können jeweils mehrere erste Steuereinrichtungen vorgesehen sein, welche gleiche Arten von Umgebungsdaten ausgeben. Dies ermöglicht es, die Daten der ersten Steuereinrichtungen in weiteren logischen Ebenen zu nutzen.

In einer Ausführungsform weist die Fahrzeugsteuervorrichtung eine Anzahl von zweiten voneinander unabhängigen Steuereinrichtungen auf, welche in einer zweiten, der ersten logischen Ebene übergeordneten logischen Ebene angeordnet sind und ausgebildet sind, gleichartige Berechnungsergebnisse der ersten Steuereinrichtungen zu kombinieren und als Eingangsgrößen für die jeweiligen Fahrzeugsteuerfunktionen zu nutzen. Die zweiten Steuereinrichtungen führen folglich eine Fusion der einzelnen Daten der ersten Steuereinrichtungen durch. Dabei fusioniert aber eine zweite Steuereinrichtung lediglich gleichartige Berechnungsergebnisse. Dabei sind unter gleichartigen Berechnungsergebnissen Berechnungsergebnisse zu verstehen, die einen gleichartigen Inhalt, also z.B. Belegungsgitter oder Objektlisten, aufweisen.

In einer Ausführungsform sind die zweiten Steuereinrichtungen ausgebildet, das Fahrzeug basierend auf den jeweiligen Berechnungsergebnissen derart zu steuern, dass das Fahrzeug einer vorgegebenen Fahrspur folgt. Damit ermöglichen die zweiten Steuereinrichtungen bereits ein teilautonomes Steuern des Fahrzeugs.

In einer Ausführungsform sind die zweiten Steuereinrichtungen als redundante Steuereinrichtungen ausgebildet, welche zumindest eine redundante Recheneinheit und/oder eine redundante Energieversorgung aufweisen. Dies erhöht die Verfügbarkeit der zweiten Steuereinrichtungen und damit der jeweiligen Fahrzeugsteuerfunktionen.

In einer Ausführungsform weist die Fahrzeugsteuervorrichtung eine Anzahl von dritten voneinander unabhängigen Steuereinrichtungen auf, welche in einer dritten, der zweiten logischen Ebene übergeordneten logischen Ebene angeordnet sind und ausgebildet sind, die von den zweiten Steuereinrichtungen kombinierten gleichartigen Berechnungsergebnisse der ersten Steuereinrichtungen zu kombinieren und als Eingangsgrößen für die jeweiligen Fahrzeugsteuerfunktionen zu nutzen. Die dritten Steuereinrichtungen fusionieren also Berechnungsergebnisse unterschiedlicher Art. Beispielsweise kann eine der dritten Steuereinrichtungen Belegungsgitter, Objektlisten und Positionsdaten des Fahrzeugs fusionieren.

In einer Ausführungsform sind die dritten Steuereinrichtungen ausgebildet, basierend auf der Kombination der von den zweiten Steuereinrichtungen kombinierten gleichartigen Berechnungsergebnisse der ersten Steuereinrichtungen ein Umfeldmodell des Fahrzeugs zu berechnen, welches den um das Fahrzeug zur Verfügung stehenden Raum aufweist und welches eine Berechnung der Bewegung weiterer Verkehrsteilnehmer ermöglicht. Dies ermöglicht eine vorausschauende und geplante Steuerung des Fahrzeugs und eine Abschätzung der Bewegungen weiterer Verkehrsteilnehmer.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer erfindungsgemäßen Fahrzeugsteuervorrichtung;
- Fig. 2: ein Ablaufdiagramm einer Ausführungsform eines erfindungsgemäßen Verfahrens;
- Fig. 3: ein Blockschaltbild einer weiteren Ausführungsform einer erfindungsgemäßen Fahrzeugsteuervorrichtung.

In allen Figuren sind gleiche bzw. funktionsgleiche Elemente und Vorrichtungen - sofern nichts Anderes angegeben ist - mit denselben Bezugszeichen versehen worden.

### Ausführungsformen der Erfindung

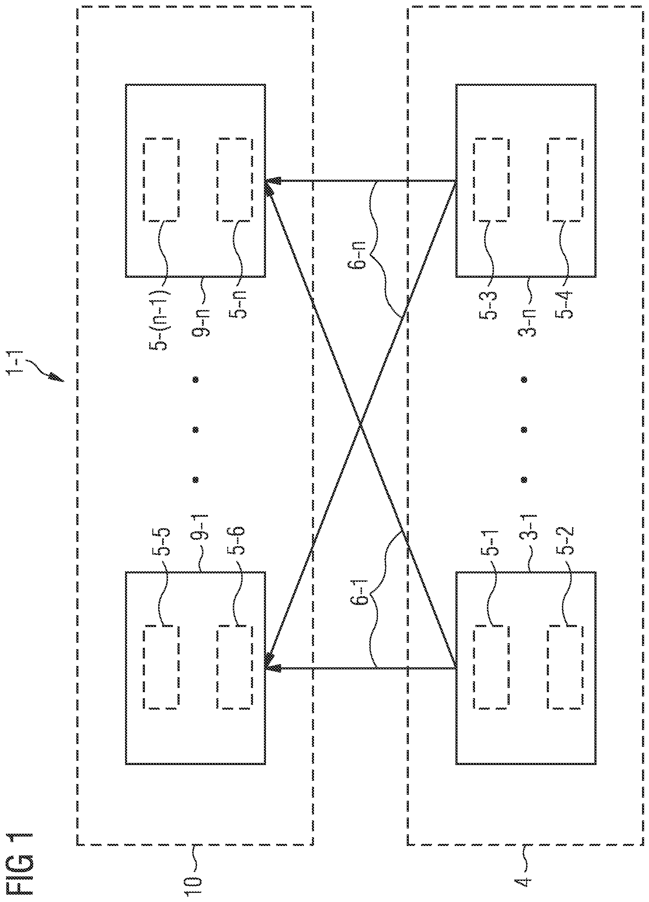

Fig. 1 zeigt ein Blockschaltbild einer Ausführungsform einer erfindungsgemäßen Fahrzeugsteuervorrichtung 1-1.

Die Fahrzeugsteuervorrichtung 1-1 der Fig. 1 weist eine erste logische Ebene 4 auf, in welcher eine erste Steuereinrichtung 3-1 und eine zweite Steuereinrichtung 3-n dargestellt sind, zwischen denen durch drei Punkte weitere Steuereinrichtungen angedeutet sind.

Die erste Steuereinrichtung 3-1 weist zwei Fahrzeugsteuerfunktionen 5-1, 5-2 auf und die zweite Steuereinrichtung 3-n weist ebenfalls zwei Fahrzeugsteuerfunktionen 5-3, 5-4 auf.

In einer weiteren, zweiten logischen Ebene 10, welche optisch und hierarchisch über der ersten Ebene 4 angeordnet ist, sind zwei zweite Steuereinrichtungen 9-1, 9-n dargestellt, zwischen welchen durch drei Punkte ebenfalls weitere Steuereinrichtungen dargestellt sind. Die Steuereinrichtung 9-1 weist die zwei Fahrzeugsteuerfunktionen 5-5 und 5-6 auf, während die Steuereinrichtung 9-n die Fahrzeugsteuerfunktionen 5-(n-1) und 5-n aufweist.

In Fig. 1 ist zu erkennen, dass die Steuereinrichtungen 3-1 und 3-n der ersten logischen Ebene 4 nicht untereinander vernetzt sind bzw. keine Informationen untereinander austauschen. Genauso sind die Steuereinrichtungen 9-1 und 9-n der zweiten logischen Ebene 10 nicht untereinander vernetzt bzw. tauschen keine Informationen untereinander aus.

Die Steuereinrichtungen 9-1 und 9-n der zweiten logischen Ebene 10 erhalten Informationen zur Berechnung der entsprechenden Fahrzeugsteuerfunktionen 5-5, 5-6, 5-(n-1) und 5-n in Form von Berechnungsergebnissen der Steuereinrichtungen 3-1 und 3-n lediglich aus der ersten logischen Ebene 4.

Die Fahrzeugsteuerfunktionen 5-1 - 5-n können eine Vielzahl unterschiedlicher Fahrzeugsteuerfunktionen 5-1 - 5-n sein. In einer Ausführungsform können die Steuereinrichtungen 3-1 - 3-n, 9-1 - 9-n, 11-1 - 11-n ausgebildet sein, mit den jeweiligen Berechnungsergebnissen 6-1 - 6-n das Fahrzeug und dabei insbesondere eine Querbeschleunigung und/oder eine Längsbeschleunigung des Fahrzeugs zu steuern.

Beispielsweise kann eine mögliche Fahrzeugfunktion 5-1 - 5-n eine Notbremsung aufweisen, welche lediglich dazu dient, eine Kollision zu vermeiden oder deren Intensität zu verringern. Weitere Fahrzeugsteuerfunktionen können z.B. eine Spurhaltefunktion, eine Fahrzeugverfolgung, eine Querführung des Fahrzeugs, z.B. in Baustellen oder auf einer vorgegebenen Fahrspur, eine Trajektorienplanung für die Führung des Fahrzeugs in komplexen Verkehrssituationen oder dergleichen aufweisen. Die Berechnungsergebnisse 6-1 - 6-n, welche durch die einzelnen Steuereinrichtungen 3-1 - 3-n bzw. 9-1 - 9-n bereitgestellt werden, können dabei Berechnungsergebnisse 6-1 - 6-n sein, welche die einzelnen Steuergeräte in den einzelnen Rechenschritten für die Durchführung der entsprechenden Fahrzeugsteuerfunktionen berechnen. Z.B. kann eines der Berechnungsergebnisse 6-1 - 6-n ein Umfeldmodell bzw. ein Belegungsgitter des Umfelds des Fahrzeugs, eine Objektliste für im Umfeld des Fahrzeugs erkannte Objekte, eine Position des Fahrzeugs oder Orientierungsdaten zu dem Fahrzeug oder dergleichen sein.

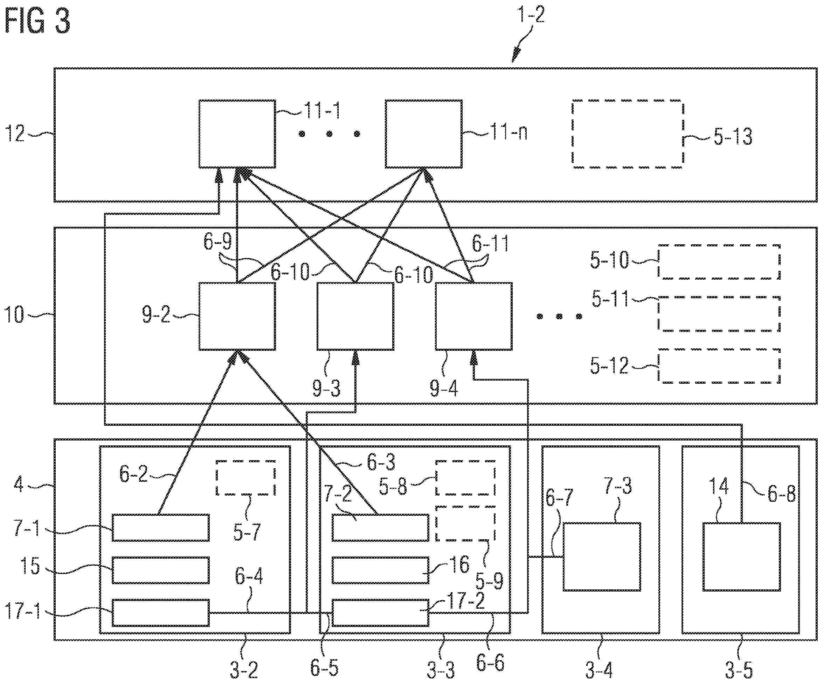

In Fig. 1 ist zu erkennen, dass Umfeldmodell und Funktionen in mehrere logische Ebenen 4, 10 unterteilt werden. Die Darstellung zweier logischer Ebenen 4 und 10 der Fig. 1 ist dabei lediglich beispielhafter Natur. In Fig. 3 ist z.B. eine Ausführungsform mit drei logischen Ebenen 4, 10 und 12 dargestellt.

Innerhalb jeder der logischen Ebenen darf keine Vernetzung der einzelnen Steuereinrichtungen 3-1 - 3-n bzw. 9-1 - 9-n vorhanden sein, d.h. bei Ausfall einer Steuereinrichtung 3-1 - 3-n bzw. 9-1 - 9-n bleiben die anderen Steuereinrichtungen 3-1 - 3-n bzw. 9-1 - 9-n funktionsfähig. Dabei können die Steuereinrichtungen 3-1 - 3-n bzw. 9-1 - 9-n als separate Hardware, z.B. als separate Steuergeräte in einem Fahrzeug, oder als separate Programmodule, z.B. als Autosar-kompatible Komponenten, welche in einem Autosar-kompatiblen Steuergerät getrennt ausgeführt werden, ausgebildet sein.

Den logischen Ebenen 4, 10 können darauf aufbauende Fahrzeugsteuerfunktionen 5-1 - 5-n zugeordnet werden. Die Fahrzeugsteuerfunktionen 5-1 - 5-n auf niedrigen logischen Ebenen haben nur unvollständige und unsichere Informationen über die Fahrzeugumgebung, welche sie z.B. basierend auf eigenen Sensoren 7-1 - 7-3 erfassen (siehe Fig. 3), und sind daher nur eingeschränkt Leistungsfähig. Mit zunehmender logischer Ebene 4, 10 steigt die Datenqualität und damit der Funktionsumfang und die Funktionsqualität. Aufgrund der zunehmenden Vernetzung können Fehler in unteren logischen Ebenen 4, 10, 12 aber zu einer Funktionseinschränkung führen. Die Fahrzeugsteuerfunktionen 5-1 - 5-n können sich nach logischen Ebenen 4, 10, 12 in ihrem Zeitpunkt des Eingriffs unterscheiden. Während auf höchster logischer Ebene 12 (siehe Fig. 3) eine komfortable Fahrzeugsteuerfunktionen 5-1 - 5-n mit frühzeitigem Eingriff, und z.B. niedrigen Beschleunigungen, umgesetzt wird, geht es auf der niedrigstem logischen Ebene 4 vor allem darum, Kollisionen ohne Rücksicht auf Komfort zu verhindern oder deren Folgen zu minimieren.

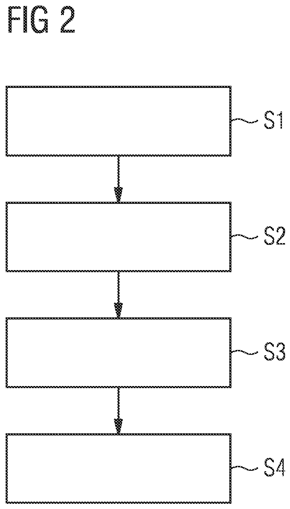

Fig. 2 zeigt ein Ablaufdiagramm einer Ausführungsform eines erfindungsgemäßen Verfahrens zum Steuern eines Fahrzeugs.

Das Verfahren sieht das Anordnen, S1, einer Anzahl von ersten voneinander unabhängigen Steuereinrichtungen 3-1 - 3-n in einer ersten logischen Ebene 4 und das Berechnen, S2, vorgegebener erster Fahrzeugsteuerfunktionen 5-1 - 5-n in den ersten Steuereinrichtungen 3-1 - 3-n vor. Ferner wird eine Anzahl von weiteren voneinander unabhängigen Steuereinrichtungen 9-1 - 9-n, 11-1 - 11-n in einer Anzahl von der ersten logischen Ebene 4 übergeordneten und untereinander hierarchisch angeordneten logischen Ebene 4, 10, 12 angeordnet, S3, und weitere vorgegebene Fahrzeugsteuerfunktionen 5-1 - 5-n in den weiteren voneinander unabhängigen Steuereinrichtungen 9-1 - 9-n, 11-1 - 11-n basierend auf Berechnungsergebnissen 6-1 - 6-n lediglich derjenigen Fahrzeugsteuerfunktionen 5-1 - 5-n, welche in Steuereinrichtungen 3-1 - 3-n, 9-1 - 9-n, 11-1 - 11-n in logischen Ebenen 4, 10, 12 angeordnet sind, welche hierarchisch unterhalb der logischen Ebene 4, 10, 12 der Steuereinrichtung 3-1 - 3-n, 9-1 - 9-n, 11-1 - 11-n der jeweiligen Fahrzeugsteuerfunktion 5-1 - 5-n angeordnet sind, berechnet, S4.

Die Fahrzeugsteuerfunktionen 5-1 - 5-n können in einer Ausführungsform dazu dienen, mit den jeweiligen Berechnungsergebnissen 6-1 - 6-n das Fahrzeug zu steuern. Dabei kann insbesondere eine Querbeschleunigung und/oder eine Längsbeschleunigung des Fahrzeugs gesteuert werden.

Um eine Trennung der einzelnen ersten Fahrzeugsteuerfunktionen 5-1 - 5-n zu erreichen, basieren die ersten Fahrzeugsteuerfunktionen 5-1 - 5-n lediglich auf Sensordaten von Sensoren 7-1 - 7-n der jeweiligen ersten Steuereinrichtung 3-1 - 3-n, auf welcher die jeweilige Fahrzeugsteuerfunktion 5-1 - 5-n ausgeführt wird. Dabei können in einer Ausführungsform die ersten Fahrzeugsteuerfunktionen 5-1 - 5-n eine Fahrzeugbewegung des Fahrzeugs und/oder eine Relativbewegung von Objekten gegenüber dem Fahrzeug und/oder die Fahrzeugposition und/oder die Fahrzeugorientierung berechnen.

Die ersten Fahrzeugsteuerfunktionen 5-1 - 5-n können dabei das Fahrzeug derart steuern, dass eine Kollision des Fahrzeugs mit einem Hindernis vermieden wird oder die Intensität der Kollision verringert wird und/oder ein Verlassen einer Fahrspur durch das Fahrzeug vermieden wird.

Den weiteren Steuereinrichtungen 9-1 - 9-n, 11-1 - 11-n stellen die ersten Fahrzeugsteuerfunktionen 5-1 - 5-n als Berechnungsergebnisse 6-1 - 6-n in einer Ausführungsform Umgebungsdaten zu einer Umgebung des Fahrzeugs bereit, wobei die Umgebungsdaten insbesondere Belegungsgitter und/oder Objektlisten und/oder Positionsdaten des Fahrzeugs und/oder Orientierungsdaten des Fahrzeugs aufweisen.

Erfindungsgemäß kann die Komplexität der Fahrzeugsteuerfunktionen 5-1 - 5-n in höheren logischen Ebenen 10, 12 erhöht werden. Dazu wird eine Anzahl von zweiten voneinander unabhängigen Steuereinrichtungen 9-1 - 9-n in einer zweiten, der ersten logischen Ebene 4 übergeordneten logischen Ebene 10 angeordnet. Die zweiten Steuereinrichtungen 9-1 - 9-n nutzen dabei lediglich gleichartige Berechnungsergebnisse 6-1 - 6-n der ersten Steuereinrichtungen 3-1 - 3-n als Eingangsgrößen für die jeweiligen Fahrzeugsteuerfunktionen 5-1 - 5-n.

Dabei können die zweiten Steuereinrichtungen 9-1 - 9-n bereits rudimentäre Komfortfunktionen ausführen, welche das Fahrzeug z.B. basierend auf den ersten Berechnungsergebnissen 6-1 - 6-n derart steuern, dass das Fahrzeug einer vorgegebenen Fahrspur folgt oder dergleichen.

In einer Ausführungsform des Verfahrens ist eine Anzahl von dritten voneinander unabhängigen Steuereinrichtungen 11-1 - 11-n in einer dritten, der zweiten logischen Ebene 10 übergeordneten logischen Ebene 12 angeordnet. Diese dritten Steuereinrichtungen 11-1 - 11-n kombinieren die von unterschiedlichen zweiten Steuereinrichtungen 9-1 - 9-n kombinierten gleichartigen Berechnungsergebnisse 6-1 - 6-n der ersten Steuereinrichtungen 3-1 - 3-n und nutzen diese als Eingangsgrößen für die jeweiligen Fahrzeugsteuerfunktionen 5-1 - 5-n.

Während die zweiten Steuereinrichtungen 9-1 - 9-n also lediglich z.B. gleichartige Berechnungsergebnisse 6-1 - 6-n, wie z.B. Objektlisten fusionieren, kombinieren die dritten Steuereinrichtungen 11-1 - 11-n unterschiedliche Arten von Berechnungsergebnissen 6-1 - 6-n, wie z.B. Objektlisten, Belegungsgitter und Fahrzeugorientierungsinformationen.

Die dritten Steuereinrichtungen 11-1 - 11-n können basierend auf dieser Kombination der von den zweiten Steuereinrichtungen 9-1 - 9-n fusionierten gleichartigen Berechnungsergebnisse 6-1 - 6-n ein umfassendes Umfeldmodell des Fahrzeugs berechnen, welches den um das Fahrzeug zur Verfügung stehenden Raum kennzeichnet und eine Berechnung der Bewegung weiterer Verkehrsteilnehmer ermöglicht. Dadurch wird es für die dritten Steuereinrichtungen 11-1 - 11-n möglich, komplexe Bewegung des Fahrzeugs in komplexen Situationen zu planen.

Fig. 3 zeigt ein Blockschaltbild einer weiteren Ausführungsform einer erfindungsgemäßen Fahrzeugsteuervorrichtung 1-2.

Die Fahrzeugsteuervorrichtung 1-2 der Fig. 3 basiert auf der Fahrzeugsteuervorrichtung 1-1 der Fig. 1 und weist drei logische Ebenen 4, 10 und 12 auf. In der ersten logischen Ebene 4 sind vier erste Steuereinrichtungen 3-2 - 3-5 dargestellt. Die zweite logische Ebene 10 ist über der ersten logischen Ebene 4 dargestellt und weist drei zweite Steuereinrichtungen 9-2 - 9-4 auf. In der dritten logischen Ebene 12, welche über der zweiten logischen Ebene 10 angeordnet ist, sind zwei dritte Steuereinrichtungen 11-1; 11-n dargestellt. Abweichende Anzahlen von Steuereinrichtungen sind in allen Ebenen möglich.

Die erste Steuereinrichtung 3-2 ist ein Radarsystem 3-2, welches einen Radarsensor 7-1 bzw. ein Netz von Radarsensoren 7-1 aufweist. Die erste Steuereinrichtung 3-3 ist eine Kamerabasierte Steuereinrichtung 3-3, welche als Sensor 7-2 eine Kamera 7-2 aufweist. Die erste Steuereinrichtung 3-4 ist eine Lokalisationssteuereinrichtung 3-4, die das Fahrzeug lokalisieren kann. Dazu weist sie als Sensor 7-3 z.B. einen GPS-Sensor, einen Inertialsensor und/oder einen Odometriesensor auf. Schließlich ist die erste Steuereinrichtung 3-5 als ein Backend ausgebildet, welches z.B. Kartendaten 14 bereitstellen kann. Das Backend 3-5 kann ein lokales Backend 3-5 in dem Fahrzeug oder ein über ein Netzwerk erreichbares zentrales Backend 3-5 sein.

In der ersten logischen Ebene 4 sind die einzelnen ersten Steuereinrichtungen 3-2 - 3-5 bzw. die Sensoren 7-1 - 7-3 nicht untereinander vernetzt. Daraus ergibt sich u.a. die Anforderung, dass jede der Steuereinrichtungen 3-2 - 3-5 bzw. der Sensoren 7-1 - 7-3 die Fahrzeugbewegung aus den eigenen Daten schätzen bzw. berechnen muss. Bei dem Radarsystem 3-2 kann z.B. ein SLAM-Ansatz (Simultaneous Localization and Mapping; deutsch Simultane Lokalisierung und Kartenerstellung) 15 verwendet werden, der statische Radar-Cluster trackt. Eine darauf aufbauende Fahrzeugsteuerfunktion 5-7 kann in einer Ausführungsform z.B. eine Kollisionsvermeidung bzw. ein Notbremsen sein.

Für die kamerabasierte Steuereinrichtung 3-3 kann z.B. ein auf optischem Fluss basierender Visual Odometry-Ansatz 16 verwendet werden. Darauf aufbauende Fahrzeugsteuerfunktion 5-8, 5-9 können in einer Ausführungsform z.B. Kollisionsvermeidung bzw. ein Notbremsen oder Lane Departure Prevention bzw. Spurhaltefunktion sein.

Ferner können die ersten Steuereinrichtungen 3-2, 3-5 basierend auf den jeweiligen Sensordaten eine Objekterkennung 17-1, 17-2 durchführen.

Die genannten Beispiele für Fahrzeugsteuerfunktion 5-7 - 5-9 stellen keine komfortable Fahrzeugführung sicher und können eine Kollision nicht in jede Fall verhindern, sind aber durch die Entkopplung der Datenquellen auch bei Ausfall mehrerer Komponenten der Fahrzeugsteuervorrichtung 1-2 noch verfügbar und dienen dazu, bei einer verspäteten oder ausbleibenden Fahrer-Übernahme bei Ausfall einer autonomen Fahrunktion das Fahrzeug weiterhin zu steuern.

Die Fahrzeugsteuerfunktionen 5-7 - 5-9 werden in einer Ausführungsform auf denjenigen Steuergeräten bzw. Steuereinrichtungen 3-2 - 3-5 partitioniert, die die benötigten Daten zur Verfügung stellen. Somit ist eine Hard- und Softwareseitige Entkopplung sichergestellt.

Die Fahrzeugsteuerfunktion 5-7 - 5-9 auf der ersten logischen Ebene 4 bilden die unterste Ebene. Die Fahrzeugsteuerfunktionen 5-7 - 5-9 können daher so ausgelegt werden, dass sie nur bei sehr sicherer Erkennung auslösen. Ferner können die Fahrzeugsteuerfunktionen 5-7 - 5-9 mehrfach vorhanden sein, z.B. kann eine Notbremsung auf Radarbasis und auf Kamerabasis ausgeführt werden.

Die Steuereinrichtungen 3-2 - 3-5 stellen jeweils die Daten bzw. Berechnungsergebnisse der Sensoren 7-1, 7-2 und 7-3 bzw. des Radar-SLAM-Ansatzes 15, der visuellen Odometrie 16 oder der Objekterkennungen 17-1, 17-2 den zweiten Steuereinrichtung 9-2 - 9-4 bereit.

Die zweite Steuereinrichtung 9-2 ist eine Steuereinrichtung 9-2, welche Belegungsgitter fusioniert, die von der ersten Steuereinrichtung 3-2 und der ersten Steuereinrichtung 3-3 bereitgestellt werden. Die zweite Steuereinrichtung 9-3 ist eine Steuereinrichtung 9-3, welche Objekte fusioniert, die von der ersten Steuereinrichtung 3-2 und der ersten Steuereinrichtung 3-3 bereitgestellt werden. Die zweite Steuereinrichtung 9-4 ist eine Steuereinrichtung 9-4, welche eine Landmarken-basierte Lokalisierung des Fahrzeugs basierend auf der visuellen Odometrie der ersten Steuereinrichtung 3-3 und den Daten der Steuereinrichtung 3-4 durchführt.

Auf der zweiten logischen Ebene 10 findet folglich eine Fusion von gleichen Eingangsdaten statt, d.h. es werden z.B. Occupancy-Grids bzw. Belegungsgitter oder Objektlisten von mehreren ersten Steuereinrichtungen 3-2 - 3-5 miteinander fusioniert. Es entsteht eine erhöhte Vernetzung und damit größere Abhängigkeit der Module untereinander. Durch die Fusion von gleichartigen Daten wird diese jedoch auf das benötigte Minimum reduziert. So gehen in die Fusion der Occupancy-Grids keine Sensordaten für die Positionierung ein.

Die Schätzung der Position findet in einer Ausführungsform bei der Integration eines neuen Belegungsgitters mit sogenannten Registrierungsverfahren statt, mit denen die optimale Ausrichtung des Belegungsgitters im fusionierten Belegungsgitter bestimmt wird.

Analog wird bei der Objekt-Fusion die Position aus einem Objekt-Matching z.B. mit einem Extended-Kalmanfilter-SLAM bestimmt und dann eine Zustandsschätzung der Objekte durchgeführt. Analog zu der ersten logischen Ebene 4 können auf Daten der zweiten logischen Ebene 10 Fahrzeugsteuerfunktionen 5-10 - 5-12 aufsetzen, die aber über eine verbesserte Datenbasis verfügen. Eine solche Fahrzeugsteuerfunktion 5-10 - 5-12 kann z.B. eine verbesserte Querführung bzw. Lateral Control des Fahrzeugs sein, das auch auf erhabene Objekte reagiert. Mit diesem kann eine Querführung z.B. in Baustellenszenarien durchgeführt werden. Bei Kameraausfall oder nicht verfügbaren Fahrstreifenmarkierungen kann so verhindert werden, dass das Fahrzeug die Fahrbahn verlässt. Es kann auch eine Heuristik angewendet werden um das Fahrzeug um richtigen Bereich fahren zu lassen, indem es z.B. im rechten Drittel des Freibereichs erkannt wird. Auf dieser logischen Ebene findet zwar eine Vernetzung der ersten Steuereinrichtungen 3-2 - 3-5 untereinander statt, so dass es bei Fehlern bzw. Ausfällen einzelner der ersten Steuereinrichtungen 3-2 - 3-5 zu Einschränkungen der Funktionalität kommen kann, allerdings besteht keine Verknüpfung der einzelnen Algorithmen untereinander. Da zudem verschiedene erste Steuereinrichtungen 3-2 - 3-5 ähnliche Eingangsdaten bzw. Berechnungsergebnisse 6-2 - 6-8 liefern (die Daten sind gleicher Art, Unterschiede bestehen bei Sichtbereich und Genauigkeit) entsteht bei Ausfall einer der ersten Steuereinrichtungen 3-2 - 3-5 eine Einschränkung der Datenqualität, eine grundsätzliche Funktion ist aber noch gewährleistet.

Im Fehlerfall einer der zweiten Steuereinrichtungen 9-2 - 9-4 bleiben die anderen zweiten Steuereinrichtungen 9-2 - 9-4 einsatzfähig, so dass einzelne Fahrzeugsteuerfunktionen 5-10 - 5-12 ausfallen, das Gesamtsystem aber nicht vollständig betroffen ist.

In einer Ausführungsform werden daher die Fahrzeugsteuerfunktionen 5-10 - 5-12 auf der zweiten logischen Ebene 10 auf einem hoch verfügbaren bzw. redundanten Steuergerät ausgeführt.

Die dritte Steuereinrichtung 11-1 und die dritte Steuereinrichtung 11-n erhalten von den zweiten Steuereinrichtungen 9-2 - 9-4 jeweils alle Berechnungsergebnisse 6-9 - 6-11. Ferner können die dritte Steuereinrichtung 11-1 und die dritte Steuereinrichtung 11-n auch Berechnungsergebnisse 6-2 - 6-8 der ersten Steuereinrichtungen 3-2 - 3-5 erhalten. Dies ist in Fig. 3 beispielhaft für die Kartendaten 14 der ersten Steuereinrichtung 3-5 dargestellt.

Auf der dritten logischen Ebene 12 werden Beziehungen zwischen den einzelnen Datenquellen hergestellt. Es kann z.B. aus mindestens einem Belegungsgitter bzw. Occupancy-Grid, mindestens einer Objektliste und Kartendaten der tatsächlich für Manöver zur Verfügung stehende Raum berechnet werden oder aus Objektliste und Kartendaten darauf geschlossen werden, wie andere Verkehrsteilnehmer sich voraussichtlich verhalten werden.

Auf der dritten logischen Ebene 12 liegt folglich eine quasi vollständige Situationsbeschreibung mit großem Szenenverständnis vor. Dies ermöglicht Fahrzeugsteuerfunktionen 5-13, wie z.B. das Planen und Ausführen von komplexen Manövern wie z.B. Spurwechseln und eine komfortable, weit vorausschauende Planung der Fahrzeugbewegung.

Die hohe Vernetzung der Module untereinander führt dazu, dass insbesondere bei Fehlern einzelner Algorithmen (z.B. die Belegungsgitter-Fusion ist aufgrund eines Fehlers nicht verfügbar) die Fahrzeugsteuerfunktionen 5-13 auf der dritten logischen Ebene 12 nicht mehr zur Verfügung stehen.

In diesem Fall stehen aber zumindest teilweise noch Fahrzeugsteuerfunktionen 5-10 - 5-12 auf der zweiten logischen Ebene 10 und je nach Fehlerfall der vollständige Umfang der ersten logischen Ebene 4 zur Verfügung, sodass eine kollisionsfreie Fahrt ermöglicht wird.

Es können z.B. keine Spurwechsel mehr ausgeführt werden oder Situationen mit hoher Bremsverzögerung auftreten, allerdings kann das Fahrzeug z.B. noch kollisionsfrei dem aktuellen Fahrstreifen folgen.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen. Der Schutzumfang wird durch die Ansprüche festgelegt.

### Bezugszeichen

- 1-1, 1-2: Fahrzeugsteuervorrichtung

- 3-1 - 3-n: erste Steuereinrichtungen
- 4: erste Ebene
- 5-1 - 5-n: Fahrzeugsteuerfunktionen
- 6-1 - 6-n: Berechnungsergebnisse
- 7-1 - 7-n: Sensoren

- 9-1 - 9-n: zweite Steuereinrichtungen
- 10: zweite Ebene
- 11-1 - 11-n: dritte Steuereinrichtungen
- 12: dritte Ebene

- 14: Kartendaten
- 15: Radar SLAM
- 16: visuelle Odometrie
- 17-1, 17-2: Objekterkennung

- S1 - S4: Verfahrensschritte

## Patentansprüche

1. Fahrzeugsteuervorrichtung (1-1, 1-2) für ein Fahrzeug, mit
einer Anzahl von ersten voneinander unabhängigen Steuereinrichtungen (3-1 - 3-n), welche in einer ersten logischen Ebene (4) angeordnet sind und ausgebildet sind, vorgegebene erste Fahrzeugsteuerfunktionen (5-1 - 5-n) zu berechnen und erste Berechnungsergebnisse (6-1 - 6-n) auszugeben;
einer Anzahl von weiteren voneinander unabhängigen Steuereinrichtungen (9-1 - 9-n, 11-1 - 11-n), welche in einer Anzahl von der ersten logischen Ebene (4) übergeordneten und untereinander hierarchisch angeordneten logischen Ebenen (10, 12) angeordnet sind und ausgebildet sind, vorgegebene weitere Fahrzeugsteuerfunktionen (5-1 - 5-n) zu berechnen und weitere Berechnungsergebnisse (6-1 - 6-n) auszugeben;
wobei die weiteren Steuereinrichtungen (9-1 - 9-n, 11-1 - 11-n) ausgebildet sind, Berechnungsergebnisse (6-1 - 6-n) lediglich derjenigen Steuereinrichtungen (3-1 - 3-n, 9-1 - 9-n, 11-1 - 11-n) als Eingangsgrößen für die entsprechenden Fahrzeugsteuerfunktionen (5-1 - 5-n) zu nutzen, welche in logischen Ebenen (4, 10, 12) angeordnet sind, welche hierarchisch unterhalb der logischen Ebene (4, 10, 12) der jeweiligen Steuereinrichtung (3-1 - 3-n, 9-1 - 9-n, 11-1 - 11-n) angeordnet sind.

2. Fahrzeugsteuervorrichtung (1-1, 1-2) nach Anspruch 1,
wobei die Steuereinrichtungen (3-1 - 3-n, 9-1 - 9-n, 11-1 - 11-n) ausgebildet sind, mit den jeweiligen Berechnungsergebnissen (6-1 - 6-n) das Fahrzeug, insbesondere eine Querbeschleunigung und/oder eine Längsbeschleunigung des Fahrzeugs, zu steuern.

3. Fahrzeugsteuervorrichtung (1-1, 1-2) nach einem der Ansprüche 1 und 2,
wobei die ersten Steuereinrichtungen (3-1 - 3-n) jeweils Sensoren (7-1 - 7-n) aufweisen und ausgebildet sind, eine Fahrzeugbewegung des Fahrzeugs und/oder eine Relativbewegung von Objekten gegenüber dem Fahrzeug und/oder die Fahrzeugposition und/oder die Fahrzeugorientierung basierend auf den Daten ihrer eigenen Sensoren (7-1 - 7-n) zu schätzen; und/oder
wobei die ersten Steuereinrichtungen (3-1 - 3-n) ausgebildet sind, das Fahrzeug basierend auf den ersten Berechnungsergebnissen (6-1 - 6-n) derart zu steuern, dass eine Kollision des Fahrzeugs mit einem Hindernis vermieden wird oder deren Intensität verringert wird und/oder ein Verlassen einer Fahrspur durch das Fahrzeug vermieden wird.

4. Fahrzeugsteuervorrichtung (1-1, 1-2) nach einem der Ansprüche 1 bis 3,
wobei die ersten Steuereinrichtungen (3-1 - 3-n) ausgebildet sind, als Berechnungsergebnisse (6-1 - 6-n) Umgebungsdaten zu einer Umgebung des Fahrzeugs auszugeben;
wobei die Umgebungsdaten insbesondere Belegungsgitter und/oder Objektlisten und/oder Positionsdaten des Fahrzeugs und/oder Orientierungsdaten des Fahrzeugs aufweisen.

5. Fahrzeugsteuervorrichtung (1-1, 1-2) nach einem der Ansprüche 1 bis 4,
mit einer Anzahl von zweiten voneinander unabhängigen Steuereinrichtungen (9-1 - 9-n), welche in einer zweiten, der ersten logischen Ebene (4) übergeordneten logischen Ebene (10) angeordnet sind und ausgebildet sind, gleichartige Berechnungsergebnisse (6-1 - 6-n) der ersten Steuereinrichtungen (3-1 - 3-n) zu kombinieren und als Eingangsgrößen für die jeweiligen Fahrzeugsteuerfunktionen (5-1 - 5-n) zu nutzen.

6. Fahrzeugsteuervorrichtung (1-1, 1-2) nach Anspruch 5,
wobei die zweiten Steuereinrichtungen (9-1 - 9-n) ausgebildet sind, das Fahrzeug basierend auf den jeweiligen Berechnungsergebnissen (6-1 - 6-n) derart zu steuern, dass das Fahrzeug einer vorgegebenen Fahrspur folgt.

7. Fahrzeugsteuervorrichtung (1-1, 1-2) nach einem der Ansprüche 5 und 6,
wobei die zweiten Steuereinrichtungen (9-1 - 9-n) als redundante Steuereinrichtungen (9-1 - 9-n) ausgebildet sind, welche zumindest eine redundante Recheneinheit und/oder eine redundante Energieversorgung aufweisen.

8. Fahrzeugsteuervorrichtung (1-1, 1-2) nach einem der Ansprüche 5 bis 7,
mit einer Anzahl von dritten voneinander unabhängigen Steuereinrichtungen (11-1 - 11-n), welche in einer dritten, der zweiten logischen Ebene (10) übergeordneten logischen Ebene (12) angeordnet sind und ausgebildet sind, die von den zweiten Steuereinrichtungen (9-1 - 9-n) kombinierten gleichartigen Berechnungsergebnisse (6-1 - 6-n) der ersten Steuereinrichtungen (3-1 - 3-n) zu kombinieren und als Eingangsgrößen für die jeweiligen Fahrzeugsteuerfunktionen (5-1 - 5-n) zu nutzen.

9. Fahrzeugsteuervorrichtung (1-1, 1-2) nach Anspruch 8,
wobei die dritten Steuereinrichtungen (11-1 - 11-n) ausgebildet sind, basierend auf der Kombination der von den zweiten Steuereinrichtungen (9-1 - 9-n) kombinierten gleichartigen Berechnungsergebnisse (6-1 - 6-n) der ersten Steuereinrichtungen (3-1 - 3-n) ein Umfeldmodell des Fahrzeugs zu berechnen, welches den um das Fahrzeug zur Verfügung stehenden Raum aufweist und welches eine Berechnung der Bewegung weiterer Verkehrsteilnehmer ermöglicht.

10. Verfahren zum Steuern eines Fahrzeugs, aufweisend:
Anordnen (S1) einer Anzahl von ersten voneinander unabhängigen Steuereinrichtungen (3-1 - 3-n) in einer ersten logischen Ebene (4);
Berechnen (S2) vorgegebener erster Fahrzeugsteuerfunktionen (5-1 - 5-n) in den ersten Steuereinrichtungen (3-1 - 3-n) und Ausgeben entsprechender Berechnungsergebnisse (6-1 - 6-n);
Anordnen (S3) einer Anzahl von weiteren voneinander unabhängigen Steuereinrichtungen (9-1 - 9-n, 11-1 - 11-n) in einer Anzahl von der ersten logischen Ebene (4) übergeordneten und untereinander hierarchisch angeordneten logischen Ebenen (4, 10, 12); und
Berechnen (S4) weiterer vorgegebener Fahrzeugsteuerfunktionen (5-1 - 5-n) in den weiteren voneinander unabhängigen Steuereinrichtungen (9-1 - 9-n, 11-1 - 11-n) basierend auf den Berechnungsergebnissen (6-1 - 6-n) lediglich derjenigen Fahrzeugsteuerfunktionen (5-1 - 5-n), welche in Steuereinrichtungen (3-1 - 3-n, 9-1 - 9-n, 11-1 - 11-n) in logischen Ebenen (4, 10, 12) angeordnet sind, welche hierarchisch unterhalb der logischen Ebene (4, 10, 12) der Steuereinrichtung (3-1 - 3-n, 9-1 - 9-n, 11-1 - 11-n) der jeweiligen Fahrzeugsteuerfunktion (5-1 - 5-n) angeordnet sind.

11. Verfahren nach Anspruch 10,
wobei die Fahrzeugsteuerfunktionen (5-1 - 5-n) mit den jeweiligen Berechnungsergebnissen (6-1 - 6-n) das Fahrzeug, insbesondere eine Querbeschleunigung und/oder eine Längsbeschleunigung des Fahrzeugs, steuern.

12. Verfahren nach einem der Ansprüche 10 und 11,
wobei die ersten Fahrzeugsteuerfunktionen (5-1 - 5-n) basierend lediglich auf Sensordaten von Sensoren (7-1 - 7-n) der jeweiligen ersten Steuereinrichtung (3-1 - 3-n), auf welcher die jeweilige Fahrzeugsteuerfunktion (5-1 - 5-n) ausgeführt wird, eine Fahrzeugbewegung des Fahrzeugs und/oder eine Relativbewegung von Objekten gegenüber dem Fahrzeug und/oder die Fahrzeugposition und/oder die Fahrzeugorientierung berechnen; und/oder
wobei die ersten Fahrzeugsteuerfunktionen (5-1 - 5-n) das Fahrzeug derart steuern, dass eine Kollision des Fahrzeugs mit einem Hindernis vermieden wird oder die Intensität der Kollision verringert wird und/oder ein Verlassen einer Fahrspur durch das Fahrzeug vermieden wird; und/oder
wobei die ersten Fahrzeugsteuerfunktionen (5-1 - 5-n) als Berechnungsergebnisse (6-1 - 6-n) Umgebungsdaten zu einer Umgebung des Fahrzeugs ausgeben, wobei die Umgebungsdaten insbesondere Belegungsgitter und/oder Objektlisten und/oder Positionsdaten des Fahrzeugs und/oder Orientierungsdaten des Fahrzeugs aufweisen.

13. Verfahren nach einem der Ansprüche 10 bis 12,
wobei eine Anzahl von zweiten voneinander unabhängigen Steuereinrichtungen (9-1 - 9-n) in einer zweiten, der ersten logischen Ebene (4) übergeordneten logischen Ebene (10) angeordnet werden, welche gleichartige Berechnungsergebnisse (6-1 - 6-n) der ersten Steuereinrichtungen (3-1 - 3-n) kombinieren und als Eingangsgrößen für die jeweiligen Fahrzeugsteuerfunktionen (5-1 - 5-n) nutzen;
wobei die zweiten Steuereinrichtungen (9-1 - 9-n) das Fahrzeug basierend auf den ersten Berechnungsergebnissen (6-1 - 6-n) insbesondere derart steuern, dass das Fahrzeug einer vorgegebenen Fahrspur folgt.

14. Verfahren nach Anspruch 13,
wobei eine Anzahl von dritten voneinander unabhängigen Steuereinrichtungen (11-1 - 11-n) in einer dritten, der zweiten logischen Ebene (10) übergeordneten logischen Ebene (12) angeordnet werden, welche die von den zweiten Steuereinrichtungen (9-1 - 9-n) kombinierten gleichartigen Berechnungsergebnisse (6-1 - 6-n) der ersten Steuereinrichtungen (3-1 - 3-n) kombinieren und als Eingangsgrößen für die jeweiligen Fahrzeugsteuerfunktionen (5-1 - 5-n) nutzen;
wobei die dritten Steuereinrichtungen (11-1 - 11-n) basierend auf der Kombination der von den zweiten Steuereinrichtungen (9-1 - 9-n) kombinierten gleichartigen Berechnungsergebnisse (6-1 - 6-n) der ersten Steuereinrichtungen (3-1 - 3-n) ein Umfeldmodell des Fahrzeugs berechnen, welches den um das Fahrzeug zur Verfügung stehenden Raum aufweist und welches eine Berechnung der Bewegung weiterer Verkehrsteilnehmer ermöglicht.

## Claims

1. A vehicle control device (1-1, 1-2) for a vehicle, having
a number of first control apparatuses (3-1 - 3-n) independent of one another, which are arranged in a first logical level (4) and are designed to calculate predefined first vehicle control functions (5-1 - 5-n) and to output first calculation results (6-1 - 6-n);
a number of further control apparatuses (9-1 - 9-n, 11-1 - 11-n) independent of one another, which are arranged in a number of logical levels (10, 12) superordinate to the first logical level (4) and below one another hierarchically and are designed to calculate predefined further vehicle control functions (5-1 - 5-n) and to output further calculation results (6-1 - 6-n);
wherein the further control apparatuses (9-1 - 9-n, 11-1 - 11-n) are designed to use calculation results (6-1 - 6-n) of only those control apparatuses (3-1 - 3-n, 9-1 - 9-n, 11-1 - 11-n) as input variables for the corresponding vehicle control functions (5-1 - 5-n), which are arranged in logical levels (4, 10, 12), which are arranged hierarchically below the logical level (4, 10, 12) of the respective control apparatus (3-1 - 3-n, 9-1 - 9-n, 11-1 - 11-n).

2. The vehicle control device (1-1, 1-2) according to Claim 1,
wherein the control apparatuses (3-1 - 3-n, 9-1 - 9-n, 11-1, 11-n) are designed to control the vehicle, in particular a lateral acceleration and/or a longitudinal acceleration of the vehicle, with the respective calculation results (6-1 - 6-n).

3. The vehicle control device (1-1, 1-2) according to any one of Claims 1 and 2,
wherein the first control apparatuses (3-1 - 3-n) each comprise sensors (7-1 - 7-n) and are designed to estimate a vehicle movement of the vehicle and/or a relative movement of objects with respect to the vehicle and/or the vehicle position and/or the vehicle orientation on the basis of the data of their own sensors (7-1 - 7-n); and/or
wherein the first control apparatuses (3-1 - 3-n) are designed to control the vehicle on the basis of the first calculation results (6-1 - 6-n) such that a collision of the vehicle with an obstacle is avoided or the intensity thereof is reduced and/or a departure from a traffic lane by the vehicle is avoided.

4. The vehicle control device (1-1, 1-2) according to any one of Claims 1 to 3,
wherein the first control apparatuses (3-1 - 3-n) are designed to output environmental data on the surroundings of the vehicle as calculation results (6-1 - 6-n);
wherein the environmental data comprise in particular occupancy grids and/or object lists and/or position data of the vehicle and/or orientation data of the vehicle.

5. The vehicle control device (1-1, 1-2) according to any one of Claims 1 to 4,
having a number of second control apparatuses (9-1 - 9-n) independent of each other, which are arranged in a second logical level (10) superordinate to the first logical level (4) and are designed to combine similar calculation results (6-1 - 6-n) of the first control apparatuses (3-1 - 3-n) and to use them as input variables for the respective vehicle control functions (5-1 - 5-n).

6. The vehicle control device (1-1, 1-2) according to Claim 5,
wherein the second control apparatuses (9-1 - 9-n) are designed to control the vehicle on the basis of the respective calculation results (6-1 - 6-n) such that the vehicle follows a predefined traffic lane.

7. The vehicle control device (1-1, 1-2) according to any one of Claims 5 and 6,
wherein the second control apparatuses (9-1 - 9-n) are designed as redundant control apparatuses (9-1 - 9-n) which comprise at least a redundant calculation unit and/or a redundant power supply.

8. The vehicle control device (1-1, 1-2) according to any one of Claims 5 to 7,
having a number of third control apparatuses (11-1 - 11-n) independent of one another, which are arranged in a third logical level (12) superordinate to the second logical level (10) and are designed to combine the similar calculation results (6-1 - 6-n) of the first control apparatuses (3-1 - 3-n) combined by the second control apparatuses (9-1 - 9-n) and to use them as input variables for the respective vehicle control functions (5-1 - 5-n).

9. The vehicle control device (1-1, 1-2) according to Claim 8,
wherein the third control apparatuses (11-1 - 11-n) are designed to calculate an environment model of the vehicle on the basis of the combination of the similar calculation results (6-1 - 6-n) of the first control apparatuses (3-1 - 3-n) combined by the second control apparatuses (9-1 - 9-n), which environment model comprises the space available around the vehicle and which makes it possible to calculate the movement of further road users.

10. A method for controlling a vehicle, comprising:
arranging (S1) a number of first control apparatuses (3-1 - 3-n) independent of one another in a first logical level (4);
calculating (S2) predefined first vehicle control functions (5-1 - 5-n) in the first control apparatuses (3-1 - 3-n) and outputting corresponding calculation results (6-1 - 6-n);
arranging (S3) a number of further control apparatuses (9-1 - 9-n, 11-1 - 11-n) independent of one another in a number of logical levels (4, 10, 12) superordinate to the first logical level (4) and arranged below one another hierarchically; and
calculating (S4) further predefined vehicle control functions (5-1 - 5-n) in the further control apparatuses (9-1 - 9-n, 11-1 - 11-n) independent of one another on the basis of the calculation results (6-1 - 6-n) of only those vehicle control functions (5-1 - 5-n) which are arranged in control apparatuses (3-1 - 3-n, 9-1 - 9-n, 11-1 - 11-n) in logical levels (4, 10, 12), which are arranged hierarchically below the logical level (4, 10, 12) of the control apparatus (3-1 - 3-n, 9-1 - 9-n, 11-1 - 11-n) of the respective vehicle control function (5-1 - 5-n).

11. The method according to Claim 10,
wherein the vehicle control functions (5-1 - 5-n) control the vehicle, in particular a lateral acceleration and/or a longitudinal acceleration of the vehicle, with the respective calculation results (6-1 - 6-n).

12. The method according to any one of Claims 10 and 11,
wherein the first vehicle control functions (5-1 - 5-n) calculate, on the basis of only sensor data of sensors (7-1 - 7-n) of the respective first control apparatus (3-1 - 3-n), on which the respective vehicle control function (5-1 - 5-n) is executed, a vehicle movement of the vehicle and/or a relative movement of objects with respect to the vehicle and/or the vehicle position and/or the vehicle orientation; and/or
wherein the first vehicle control functions (5-1 - 5-n) control the vehicle such that a collision of the vehicle with an obstacle is avoided or the intensity of the collision is reduced and/or a departure from a traffic lane by the vehicle is avoided; and/or
wherein the first vehicle control functions (5-1 - 5-n) output environmental data about the surroundings of the vehicle as calculation results (6-1 - 6-n), wherein the environmental data comprise in particular occupancy grids and/or object lists and/or position data of the vehicle and/or orientation data of the vehicle.

13. The method according to any one of Claims 10 to 12,
wherein a number of second control apparatuses (9-1 - 9-n) independent of one another are arranged in a second logical level (10) superordinate to the first logical level (4), which combine similar calculation results (6-1 - 6-n) of the first control apparatuses (3-1 - 3-n) and use them as input variables for the respective vehicle control functions (5-1 - 5-n) ;
wherein the second control apparatuses (9-1 - 9-n) control the vehicle on the basis of the first calculation results (6-1 - 6-n), in particular such that the vehicle follows a predefined traffic lane.

14. The method according to Claim 13,
wherein a number of third control apparatuses (11-1 - 11-n) independent of one another are arranged in a third logical level (12) superordinate to the second logical level (10), which combine the similar calculation results (6-1 - 6-n) of the first control apparatuses (3-1 - 3-n) combined by the second control apparatuses (9-1 - 9-n) and use them as input variables for the respective vehicle control functions (5-1 - 5-n) ;
wherein the third control apparatuses (11-1 - 11-n) calculate an environment model of the vehicle on the basis of the combination of the similar calculation results (6-1 - 6-n) of the first control apparatuses (3-1 - 3-n) combined by the second control apparatuses (9-1 - 9-n), which environment model comprises the space available around the vehicle and which makes it possible to calculate the movement of further road users.

## Revendications

1. Dispositif de commande de véhicule (1-1, 1-2) pour un véhicule, avec
une multiplicité de premières installations de commande indépendantes les unes des autres (3-1 - 3-n), lesquelles sont disposées à un premier niveau logique (4) et sont formées pour calculer des premières fonctions de commande de véhicule spécifiées (5-1 - 5-n) et pour sortir des premiers résultats de calcul (6-1 - 6-n) ;
une multiplicité d'installations de commande indépendantes les unes des autres supplémentaires (9-1 - 9-n, 11-1 - 11-n), lesquelles sont disposées à une multiplicité de niveaux logiques (10, 12) supérieurs au premier niveau logique (4) et sont disposées de façon hiérarchique les uns par rapport aux autres et sont formées pour calculer des fonctions de commande de véhicule supplémentaires spécifiées (5-1, 5-n) et pour sortir des résultats de calcul supplémentaires (6-1 - 6-n) ;
les installations de commande supplémentaires (9-1 - 9-n, 11-1 - 11-n) étant formées pour utiliser comme grandeurs d'entrée pour les fonctions de commande de véhicule correspondantes (5-1, 5-n) uniquement des résultats de calcul des installations de commande (3-1 - 3-n, 9-1 - 9-n, 11-1 - 11-n) qui sont disposées à des niveaux logiques (4, 10, 12) étant disposés de façon hiérarchiquement inférieure au niveau logique (4, 10, 12) de l'installation de commande respective (3-1 - 3-n, 9-1 - 9-n, 11-1 - 11-n).

2. Dispositif de commande de véhicule (1-1, 1-2) selon la revendication 1,
les installations de commande (3-1 - 3-n, 9-1 - 9-n, 11-1 - 11-n) étant formées pour commander le véhicule, en particulier l'accélération transversale et/ou l'accélération longitudinale, à partir des résultats de calcul (6-1 - 6-n) respectifs.

3. Dispositif de commande de véhicule (1-1, 1-2) selon l'une des revendications 1 et 2,
les premières installations de commande (3-1 - 3-n) présentant respectivement des capteurs (7-1 - 7-n) et étant formées pour évaluer un déplacement du véhicule et/ou un déplacement relatif d'objets par rapport au véhicule et/ou la position du véhicule et/ou l'orientation du véhicule, basé sur les données de leurs propres capteurs (7-1 - 7-n) ; et/ou
les premières installations de commande (3-1 - 3-n) étant formées pour commander le véhicule de telle sorte qu'une collision du véhicule avec un obstacle est empêchée ou que son intensité est diminuée et/ou qu'une sortie d'une voie de circulation par le véhicule est empêchée, basé sur les premiers résultats de calcul (6-1 - 6-n).

4. Dispositif de commande de véhicule (1-1, 1-2) selon l'une des revendications 1 à 3,
les premières installations de commande (3-1 - 3-n) étant formées pour sortir des données d'environnement relatives à un environnement du véhicule comme résultats de calcul (6-1 - 6-n) ;
les données d'environnement présentant en particulier des grilles d'occupation et/ou des listes d'objets et/ou des données de position du véhicule et/ou des données d'orientation du véhicule.

5. Dispositif de commande de véhicule (1-1, 1-2) selon l'une des revendications 1 à 4,
avec une multiplicité de deuxièmes installations de commande indépendantes les unes des autres (9-1 - 9-n), lesquelles sont disposées à un deuxième niveau logique (10) supérieur au premier niveau logique (4) et sont formées pour combiner des premiers résultats de calcul similaires (6-1 - 6-n) des premières installations de commande (3-1 - 3-n) et pour utiliser ces résultats comme grandeurs d'entrée pour les fonctions de commande de véhicule respectives (5-1 - 5-n).

6. Dispositif de commande de véhicule (1-1, 1-2) selon la revendication 5,
les deuxièmes installations de commande (9-1 - 9-n) étant formées pour commander le véhicule de telle sorte que le véhicule circule dans une voie de circulation spécifiée, basé sur les résultats de calcul respectifs (6-1 - 6-n).

7. Dispositif de commande de véhicule (1-1, 1-2) selon l'une des revendications 5 et 6,
les deuxièmes installations de commande (9-1 - 9-n) étant formées comme des installations de commande redondantes (9-1 - 9-n), lesquelles présentent au moins une unité de calcul redondante et/ou ou en alimentation en énergie redondante.

8. Dispositif de commande de véhicule (1-1, 1-2) selon l'une des revendications 5 à 7,
avec une multiplicité de troisièmes installations de commande indépendantes les unes des autres (11-1 - 11-n), lesquelles sont disposées à un troisième niveau logique (12) supérieur au deuxième niveau logique (10) et sont formées pour combiner les résultats de calcul similaires (6-1 - 6-n) des premières installations de commande (3-1 - 3-n) combinés par les deuxièmes installations de commande (9-1 - 9-n) et pour utiliser ces résultats comme grandeurs d'entrée pour les fonctions de commande de véhicule respectives (5-1 - 5-n).

9. Dispositif de commande de véhicule (1-1, 1-2) selon la revendication 8,
les troisièmes installations de commande (11-1 - 11-n) étant formées pour calculer un modèle d'environnement du véhicule, basé sur la combinaison des résultats de calcul similaires (6-1 - 6-n) des premières installations de commande (3-1 - 3-n) combinés par les deuxièmes installations de commande (9-1 - 9-n), lequel modèle présente l'espace disponible autour du véhicule et permet un calcul du déplacement d'autres usagers de la route.

10. Procédé pour commander un véhicule, présentant :
disposer (S1) une multiplicité de premières installations de commande indépendantes les unes des autres (3-1 - 3-n) à un premier niveau logique (4) ;
calculer (S2) des premières fonctions de commande de véhicule spécifiées (5-1 - 5-n) dans les premières installations de commande (3-1 - 3-n) et sortir des résultats de calcul correspondants (6-1 - 6-n) ;
disposer (S3) une multiplicité d'installations de commande indépendantes les unes des autres supplémentaires (9-1 - 9-n, 11-1 - 11-n) à une multiplicité de niveaux logiques (4, 10, 12) supérieurs au premier niveau logique (4) et disposés de façon hiérarchique les uns par rapport aux autres ; et
calculer (S4) des fonctions de commande de véhicule supplémentaires spécifiées (5-1 - 5-n) dans les installations de commande indépendantes les unes des autres (9-1 - 9-n, 11-1 - 11-n), basé uniquement sur les résultats de calcul (6-1 - 6-n) des fonctions de commande de véhicule (5-1 - 5-n) qui sont disposées dans des installations de commande (3-1 - 3-n, 9-1 - 9-n, 11-1 - 11-n) à des niveaux logiques (4, 10, 12) étant disposés de façon hiérarchiquement inférieure au niveau logique (4, 10, 12) de l'installation de commande (3-1 - 3-n, 9-1 - 9-n, 11-1 - 11-n) de la fonction de commande de véhicule respective (5-1 - 5-n).

11. Procédé selon la revendication 10,
les fonctions de commande de véhicule (5-1 - 5-n) commandant le véhicule, en particulier une accélération transversale et/ou une accélération longitudinale du véhicule, à l'aide des résultats de calcul respectifs (6-1 - 6-n).

12. Procédé selon l'une des revendications 10 et 11,
les premières fonctions de commande de véhicule (5-1 - 5-n) calculant un déplacement du véhicule et/ou un déplacement relatif d'objets par rapport au véhicule et/ou la position du véhicule et/ou l'orientation du véhicule uniquement sur la base des données de capteurs (7-1 - 7-n) de la première installation de commande respective (3-1 - 3-n) sur laquelle la fonction de commande de véhicule respective (5-1 - 5-n) est exécutée ; et/ou
les premières fonctions de commande de véhicule (5-1 - 5-n) commandant le véhicule de telle sorte qu'une collision du véhicule avec un obstacle est empêchée ou que l'intensité de la collision est diminuée et/ou qu'une sortie d'une voie de circulation par le véhicule est empêchée ; et/ou
les premières fonctions de commande de véhicule (5-1 - 5-n) sortant des données d'environnement relatives à un environnement du véhicule comme résultats de calcul (6-1 - 6-n), les données d'environnement présentant en particulier des grilles d'occupation et/ou des listes d'objets et/ou des données de position du véhicule et/ou des données d'orientation du véhicule.

13. Procédé selon l'une des revendications 10 à 12,
une multiplicité de deuxièmes installations de commande indépendantes les unes des autres (9-1 - 9-n) étant disposées à un deuxième niveau logique (10) supérieur au premier niveau logique (4), lesquelles installations combinent des résultats de calcul similaires (6-1 - 6-n) des premières installations de commande (3-1 - 3-n) et utilisent ces résultats comme grandeurs d'entrée pour les fonctions de commande de véhicule respectives (5-1 - 5-n) ;
les deuxièmes installations de commande (9-1 - 9-n) commandant en particulier le véhicule de telle sorte que le véhicule circule dans une voie de circulation spécifiée, basé sur les premiers résultats de calcul (6-1 - 6-n).

14. Procédé selon la revendication 13,
une multiplicité de troisièmes installations de commande indépendantes les unes des autres (11-1 - 11-n) étant disposées à un troisième niveau logique (12) supérieur au deuxième niveau logique (10), lesquelles installations combinent les résultats de calcul similaires (6-1 - 6-n) des premières installations de commande (3-1 - 3-n) combinés par les deuxièmes installations de commande (9-1 - 9-n) et utilisent ces résultats comme grandeurs d'entrée pour les fonctions de commande de véhicule respectives (5-1 - 5-n) ;
les troisièmes installations de commande (11-1 - 11-n) calculant un modèle d'environnement du véhicule basé sur la combinaison de résultats de calcul similaires (6-1 - 6-n) des premières installations de commande (3-1 - 3-n) combinés par les deuxièmes installations de commande (9-1 - 9-n), lequel modèle présente l'espace disponible autour du véhicule et permet un calcul du déplacement d'autres usagers de la route.
